Europäisches Patentamt

European Patent Office

Office européen des brevets

(19)

(11) Numéro de publication: **0 076 187**
**A1**

(12) **DEMANDE DE BREVET EUROPEEN**

(21) Numéro de dépôt: **82401669.5**

(22) Date de dépôt: **14.09.82**

(51) Int. Cl.³: **G 02 B 7/26**

(30) Priorité: **24.09.81 FR 8118041**

(43) Date de publication de la demande:
**06.04.83 Bulletin 83/14**

(84) Etats contractants désignés:
**DE GB IT NL SE**

(71) Demandeur: **THOMSON-CSF**
**173, Boulevard Haussmann**
**F-75379 Paris Cedex 08(FR)**

(72) Inventeur: **Papuchon, Michel**
**THOMSON-CSF SCPI 173, bld Haussmann**
**F-75379 Paris Cedex 08(FR)**

(72) Inventeur: **Bourbin, Yannic**
**THOMSON-CSF SCPI 173, bld Haussmann**
**F-75379 Paris Cedex 08(FR)**

(72) Inventeur: **Kayoun, Pierre**
**THOMSON-CSF SCPI 173, bld Haussmann**
**F-75379 Paris Cedex 08(FR)**

(54) Procédé de couplage entre un guide optique réalisé en optique intégrée et une fibre optique monomode.

(57) L'invention concerne un procédé de couplage d'un guide en optique intégrée (G) à une fibre optique (F).

Le procédé consiste à traiter la fibre (F) sur une partie terminale (T) de façon à modifier sur la face terminale (T) de la fibre la valeur du paramètre $W_o$, du mode fondamental supposé gaussien. Cette valeur de $W_o$ en sortie est sensiblement égale à $\sqrt{W_x W_y}$, $W_x$ et $W_y$ étant les paramètres définissant le mode dans le guide intégré supposé également gaussien à deux dimensions. Le traitement consiste à étirer la fibre ou de la chauffer simplement pour changer son gradient d'indice.

Application aux télécommunications optiques.

**FIG.1**

PROCEDE DE COUPLAGE ENTRE UN GUIDE OPTIQUE REALISE
EN OPTIQUE INTEGREE ET UNE FIBRE OPTIQUE MONOMODE

L'objet de la présente invention est le couplage entre un guide optique, réalisé en optique intégrée, et une fibre optique monomode.

Les fibres optiques monomodes sont utilisées pour les télécommunications optiques, parce qu'elles permettent la propagation de signaux avec des bandes passantes dépassant le gigahertz.

En télécommunications optiques, on utilise aussi des modulateurs et des commutateurs que l'on sait réaliser avantageusement en optique intégrée. Les guides de ces modulateurs et commutateurs réalisés en optique intégrfée doivent être couplés aux lignes de télécommunications réalisées en fibres optiques monomodes, et cela en introduisant le minimum de pertes de transmission dues au couplage.

On sait coupler une fibre monomode et un guide d'onde intégré en rendant négligeables les erreurs de positionnement par des méthodes qui ont été divulguées notamment par H.P. HSU et A.F. MILTON dans la revue Electronics Letters Vol. 12, N° 16 du 5 Août 1976. Un procédé amélioré d'alignement d'une fibre optique monomode et d'un guide d'onde intégré, faisant partie d'un circuit optique intégré, faisant l'objet d'une demande de brevet N° 80.27 693 déposée le 29 Décembre 1980 par la Demanderesse, est caractérisé en ce qu'il consiste à loger la fibre dans un sillon rectiligne d'une plaquette, cette plaquette reposant sur un premier support, à juxtaposer à ce premier support, un second support par aboutement de faces de glissement planes, le circuit optique intégré étant solidaire de ce second support, à aligner les axes et les extrémités de ce guide d'onde et de cette fibre par déplacement de cette fibre dans ce sillon et par glissement du premier support par rapport au second support, à rendre solidaires l'ensemble de la fibre et de la plaquette et premier support ; et à solidariser les supports par un film de matériau adhésif recouvrant ces faces, ce matériau étant appliqué à l'état fluide, au moins dans la phase finale de cet alignement.

Toutefois, l'efficacité de couplage dépend du plus ou moins bon recouvrement entre les modes de répartition de l'énergie lumineuse dans la section de la fibre et dans celle du guide d'onde intégré.

D'une part, dans la fibre, dont le rayon de coeur n'est que de quelques microns dans le cas d'une fibre monomode, on a une répartition circulaire sensiblement gaussienne du champ électrique. La distance $W_o$ (paramètre de répartition) par rapport à l'axe de la fibre, pour laquelle le champ électrique tombe à $1/e$ par rapport à sa valeur sur l'axe, est également de l'ordre de quelques microns.

D'autre part, le champ électrique d'un guide d'onde à confinement latéral réalisé en optique intégrée, a, dans le plan de la section, une répartition elliptique sensiblement gaussienne suivant deux axes rectangulaires. On définit dans le cas du guide à section rectangulaire, deux paramètres de répartition $W_x$ et $W_y$ qui sont les distances mesurées sur les axes rectangulaires x et y auxquelles le champ électrique tombe à $1/e$ de la valeur au centre du guide.

L'invention permet d'améliorer le couplage en adaptant les modes de répartition du champ électrique de façon à améliorer leur recouvrement mutuel, dans le cas (qui est général) où $W_o$ est supérieur à $\sqrt{W_x W_y}$.

La présente invention concerne un procédé de couplage d'un guide d'optique intégré et d'une fibre optique monomode, la fibre monomode, propageant un mode de répartition sensiblement gaussien du champ électrique de paramètre de répartition $W_o$ et le guide d'onde optique intégré à confinement latéral, propageant un mode de répartition de champ électrique présentant, dans le plan de section droite du guide, deux paramètres de répartition distincts $W_x$ et $W_y$, caractérisé par le fait qu'il comporte une étape préliminaire au cours de laquellle au moins un des éléments à coupler est traité thermiquement sur sa partie terminale de façon à réduire dans la section d'aboutissement l'écart entre $W_o$ et $\sqrt{W_x W_y}$.

D'autres caractéristiques et avantages ressortiront de la description qui va suivre illustrée par les figures qui représentent :

- figure 1 : la vue schématique du couplage d'une fibre optique et d'un guide réalisé en optique intégrée ;

- figure 2 : les répartitions respectives de champ électrique dans le guide d'optique intégrée et dans la fibre ;

- figure 3 : un diagramme explicatif.

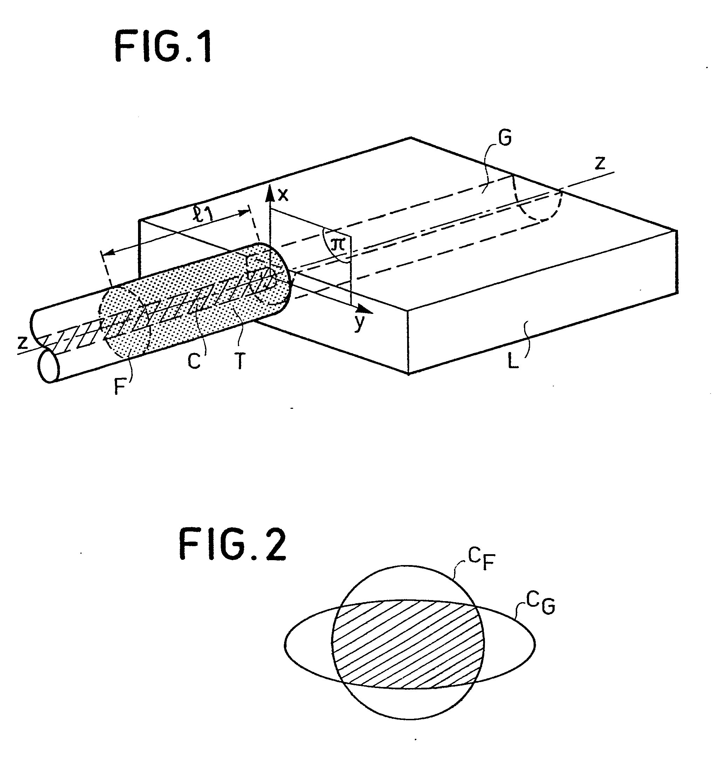

On a représenté sur la figure 1, un guide en optique intégrée G réalisé sur une lame L. Par exemple, le guide G est réalisé par diffusion de titane sur un substrat L de niobate de lithium.

La fibre optique monomode F qu'il faut coupler en guide G a un coeur C de rayon a.

Si l'on prend des coordonnées x et y dans la section d'entrée du guide, on peut généralement représenté le champ électrique $E_1(x,y)$ dans la section du guide par une expression de la forme :

$$E_1(x,y) = \frac{\pi}{4 W_x W_y} \exp - (\frac{x^2}{W_x^2} + \frac{y^2}{W_y^2}) \qquad (1)$$

où $W_x$ et $W_y$ dépendent des dimensions et des indices de réfraction du guide optique G.

On peut distinguer entre fibres monomodes à indice de réfraction à variation continue ou à variation brusque.

Pour les fibres à indice de réfraction à variation brusque, on a, si r est la distance à l'axe z de la fibre et n(r) l'indice de réfraction :

$$n(r) = n(g) \qquad \text{pour } r > a$$
$$n(r) = n(g) + \Delta n \qquad \text{pour } r < a \qquad (2)$$

avec $\Delta n = n(c) - n(g)$

n(g) et n(c) étant les indices de réfraction de la gaine et du coeur et a étant le rayon du coeur, $\Delta n$ est appelé aussi "saut d'indice".

Pour les fibres à indices de réfraction continu, n(r) est donné par la relation suivante où on suppose que n(r) est Gaussien :

$$n(r) = n(g) + \Delta n \exp -r^2/a^2 \qquad (3)$$

Pour simplifier, on appellera par la suite a le rayon du coeur et n la variation d'indice pour les deux sortes de fibres, les mêmes lois de propagation s'appliquant pratiquement dans ces deux cas (2) et (3).

Dans le cas où la variation d'indice est discontinue on peut montrer que pour, qu'une fibre soit monomode, il faut que :

$$V < 2,4 \qquad (4)$$

avec $V = \frac{a 2 \pi}{\lambda} \sqrt{2n \Delta n} \qquad (5)$
où $\lambda$ est la longueur d'onde.

4

Le mode fondamental, qui seul peut se propager si la relation (4) est remplie, est pratiquement tel que :

$$E_2(r) = \frac{\pi}{4W_0^2} \exp - r^2/W_0^2 \qquad (6)$$

où $E(r)$ est le champ électrique, $W_0$ est sensiblement donné, pour une répartition Gaussienne par le relation :

$$W_0 = a/(V-1)^{\frac{1}{2}} \qquad (7)$$

où V est donné par (5)

Par contre pour une variation brusque de l'indice, $W_0$ est donné par :

$$W'_0 = \frac{a}{Ln(V^2)}$$

Si l'on suppose que l'axe z de la fibre F est bien centré par rapport au guide G avec une erreur angulaire négligeable et que d'autre part l'extrémité de la fibre F est pratiquement en contact de l'entrée du guide G, le couplage fibre-guide est donné par la relation :

$$\gamma = \left[\iint E_1(x,y)\, E_2(x,y)\, dxdy\right]^2 \qquad (8)$$

où $E_1(x,y)$ et $E_2(x,y)$ sont les valeurs normalisées des champs électriques des modes dans le guide intégré G et dans la fibre F l'intégration se faisant dans le plan de $\pi$ la figure 1.

D'après les relations (1), (6) et (8) on peut montrer que $\gamma$ est maximum si

$$W_0 = \sqrt{W_x W'_y}$$

La figure 2 montrent schématiquement les courbes $C_G$ et $C_F$ correspondant aux points pour lesquels $E_1(x,y)$ et $E_2(x,y)$ prennent les valeurs à $1/e$ du maximum.

Suivant l'invention partant d'une fibre optique monomode d'un certain $W_0(i)$ on traite l'extrémité de la fibre pour obtenir à la sortie un $W_0^{(t)}$ ,tel que :

$$W_0^{(t)} = \sqrt{W_x W'_y}$$

Suivant un premier mode de réalisation, l'augmentation de $W_0$ en sortie de la fibre est obtenue par étirage de la parties terminale T sur une longueur $l_1$.

On prend typiquement $l_1$ supérieure à 100 $\mu$m

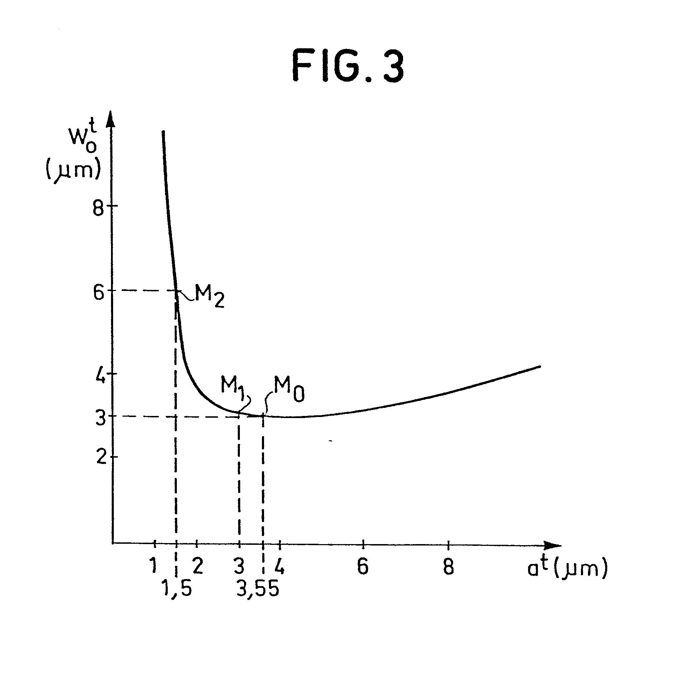

Sur la figure 3 on a représenté la variation de $W_0^t$ en sortie en fonction du rayon du coeur de sortie $a^t$ pour une variation Gaussienne de l'indice d'après la relation (7).

Suivant un deuxième mode de réalisation de l'invention, pour une fibre monomode à variation d'indice continue, la valeur de $W_0$ en sortie $W_0^t$ est augmentée par un chauffage qui a pour effet une migration des dopants. Cette opération produit pour une répartition Gaussienne de l'indice une augmentation du rayon du coeur et une diminution de $\Delta n$.

Il faut noter que les deux traitements qui viennent d'être décrits qui concernent l'adaptation en agissant sur la fibre, sont transposables au cas où l'on voudrait agir sur les paramètres $W_x$ et $W_y$ du guide d'onde optique intégré pour obtenir la relation $W_0 = \sqrt{W_x W_y}$. On agira par exemple par migration de dopant sur la partie terminale d'un guide de largeur constante ou par modification progressive de la largeur de la région terminale du guide d'onde intégré.

## REVENDICATIONS

1. Procédé de couplage d'un guide d'optique intégré (G) et d'une fibre optique monomode (F), la fibre monomode propageant un mode de répartition sensiblement gaussien du champ électrique de paramètre de répartition $W_o$ et le guide d'onde d'optique intégrfé à confinement latéral, propageant un mode de répartition de champ électrique présentant, dans le plan de section droite du guide, deux paramètres de répartition distincte $W_x$ et $W_y$, caractérisé par le fait qu'il comporte une étape préliminaire au cours de laquelle au moins un des éléments à coupler est traité thermiquement sur sa partie terminale de façon à réduire dans la section d'aboutissement l'écart entre $W_o$ et $\sqrt{W_x W_y}$.

2. Procédé de couplage suivant la revendication 1, caractérisé par le fait que le traitement de la partie terminale consiste à étirer la fibre F de façon à obtenir sur sa face terminale un rayon de coeur $a^t$, $a^t$ ayant une valeur prédéterminée.

3. Procédé de couplage suivant la revendication 1, caractérisé par le fait que la fibre (F) est à variation d'indice continue et que le traitement de la partie terminale (T) consiste à la chauffer pour obtenir une migration des dopants ayant pour effet de modifier sur cette partie de façon prédéterminée la valeur du rayon de coeur.

4. Procédé de couplage suivant les revendications 2 et 3, caractérisé par le fait que le rayon terminal $a^t$ est choisi de façon à réaliser la condition : $W_o^t = \sqrt{W_x W_y}$, où $W_o^t$ est le paramètre de la fibre dans le plan terminal $(\pi)$.

5. Procédé de couplage suivant la revendication 1, caractérisé par le fait que c'est la partie terminale du guide intégré qui est traitée thermiquement pour obtenir l'adaptation fibre-guide intégré.

# FIG.1

# FIG.2

# FIG.3

Office européen
des brevets

**RAPPORT DE RECHERCHE EUROPEENNE**

**0076187**
Numéro de la demande

EP 82 40 1669

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 02 B 7/26 |
| X | NAVY TECHNICAL DISCLOSURE BULLETIN, vol. 2, no. 12, décembre 1977, pages 17-20, Arlington (USA); J.HAMMER et al.: "Film fiber couplers and method of fabrication". *Page 19, ligne 7 - page 20, ligne 3; figures 1A-2B* | 1 | |
| X | APPLIED OPTICS, vol. 17, no. 6, 15 mars 1978, pages 895-898, New York (USA); J.T.BOYD et al.: "Optical coupling from fibers to channel waveguides formed on silicon". *Résumé; page 896, colonne de gauche, ligne 26 - page 896, colonne de droite, ligne 19; figure 1* | 1 | |
| Y | US-A-3 825 319 (J.S.COOK et al.) *Résumé; colonne 1, lignes 33-61; colonne 2, lignes 11-68; colonne 3, ligne 32 - colonne 4, ligne 15; figure unique* | 1,2 | DOMAINES TECHNIQUES RECHERCHES (Int. Cl. ³) G 02 B 7/26 H 04 B 9/00 |
| Y | US-A-3 819 249 (M.BORNER et al.) *Résumé; colonne 2, ligne 56 - colonne 3, ligne 26; colonne 3, lignes 37-50; figures 1-9* | 1,3,5 | |
| | --- -/- | | |

Le présent rapport de recherche a été établi pour toutes les revendications

| Lieu de la recherche | Date d'achèvement de la recherche | Examinateur |
|---|---|---|
| LA HAYE | 30-11-1982 | BEAVEN G.L. |

**RAPPORT DE RECHERCHE EUROPEENNE**

Office européen
des brevets

EP 82 40 1669

| | DOCUMENTS CONSIDERES COMME PERTINENTS | | Page 2 |
|---|---|---|---|
| Catégorie | Citation du document avec indication, en cas de besoin, des parties pertinentes | Revendication concernée | CLASSEMENT DE LA DEMANDE (Int. Cl. 3) |
| A | US-A-3 802 761 (T.G.GIALLORENZI) *Résumé; colonne 3, lignes 11-33; figures 1-5* | 1,3,5 | |
| A | APPLIED OPTICS, vol. 15, no. 6, juin 1976, pages 1394-1397, New York (USA); E.GARMIRE et al.: "Zinc-diffused two-dimensional optical waveguides in n-type GaAs". *Page 1394; colonne de droite, ligne 4 - page 1395, colonne de gauche, ligne 7; figure 1* | 1,3,5 | |
| A | US-A-3 864 019 (G.SHOLINSKY) *Résumé; figures 1-4* | 1 | |
| | ----- | | DOMAINES TECHNIQUES RECHERCHES (Int. Cl. 3) |

Le présent rapport de recherche a été établi pour toutes les revendications

| Lieu de la recherche | Date d'achèvement de la recherche | Examinateur |
|---|---|---|
| LA HAYE | 30-11-1982 | BEAVEN G.L. |